# EUROPEAN PATENT SPECIFICATION

(11) **EP 0 656 966 B1**
(45) Date of publication and mention of the grant of the patent: **16.04.1997**
(21) Application number: 93919744.8
(22) Date of filing: 11.08.1993
(51) Int. Cl.: D21C 9/10, D21C 9/16, D21C 9/153, D21C 11/00

(54) **METHOD OF TREATING PROCESS WATER**
METHODE ZUM BEHANDELN VON ABWÄSSERN
TRAITEMENT POUR EAUX RESIDUELLES

(30) Priority: 28.08.1992 SE 9202464; 07.04.1993 SE 9301160
(43) Date of publication of application: 14.06.1995
(73) Proprietor: SUNDS DEFIBRATOR INDUSTRIES AKTIEBOLAG, S-851 94 Sundsvall (SE)
(72) Inventor: GERMGARD, Ulf, S-863 00 Sundsbruk (SE); NORDEN, Solveig, S-860 20 Njurunda (SE)
(74) Representative: Sundqvist, Hans
(86) International application number: PCT/SE93/00660
(87) International publication number: WO 94/05850

(56) References cited:
- EP-A- 0 456 626
- SE-A- 8 001 839

## Description

This invention relates to a method of treating process water, which contains metal ions, in connection with the bleaching of pulp of lignocellulose-containing material. In order to minimize the effect by various emissions,

such as BOD, COD, paint etc. on the environment, there is a strong interest to restrict the emissions by closing the wastewater system of the bleach plants. This implies, that the wastewater should be recycled to the process instead of being emitted. As a result of closing the system, however, the content of metal ions, such as manganese, copper, iron etc. in the system can increase to a level giving rise to problems at bleaching with hydrogen peroxide and, respectively, ozone.

The metal ions enter the system via the wood raw material and therefore, the affluent of metal ions cannot be eliminated as would be desirable from a process point of view. The content of these metal ions in the pulp, however, is very low and, therefore, they do not cause any environmental problem, not in the local working environment and not in the recipient, either.

In future, the bleaching of papermaking pulp will be based to a high degree on hydrogen peroxide bleaching and ozone bleaching. For achieving high ISO-brigthness, this type of bleaching requires the unbleached pulp and process water to be free, or substantially free, of certain metal ions, because otherwise a considerable disintegration of charged hydrogen peroxide to water and oxygen and, respectively, of charged ozone to oxygen will take place, without any simultaneous bleaching effect.

In order to remove the metal ions prior to bleaching, the pulp must be pretreated with chemicals, for example acid or complex formers such as EDTA or DTPA, which selectively bind the undesired metal ions and thereby render it possible to wash them out prior to the bleaching. For process reasons, the resulting washing water must be eliminated from the system, and at the same time environmental reasons require that the washing water is not emitted.

According to SE, A, 80 01839 mechanical pulp is bleached with peroxide. Prior to the bleaching complex formed trace metals are washed out from the pulp by means of a washing liquid. This washing liquid is then treated with an ion exchanging resin which removes the complex formed trace metals. Then the ion exchanger has to be eluated and the eluate destructed. This method is both complicated and expensive and would cause environmental problems.

According to EP, A1, 456 626 chemical pulp is treated with complex former and then bleached with peroxide. In a washing step between these two steps the complex formed metals are removed. However, it is not disclosed how the process water from this washing step should be treated.

The present invention offers a solution for the aforesaid problems. The invention, thus, has the object to remove metal ions from process water enriched in metals and thereby render it possible to re-use the process water and thereby to close the wastewater system of the bleach plant, which is desirable from an environmental point of view.

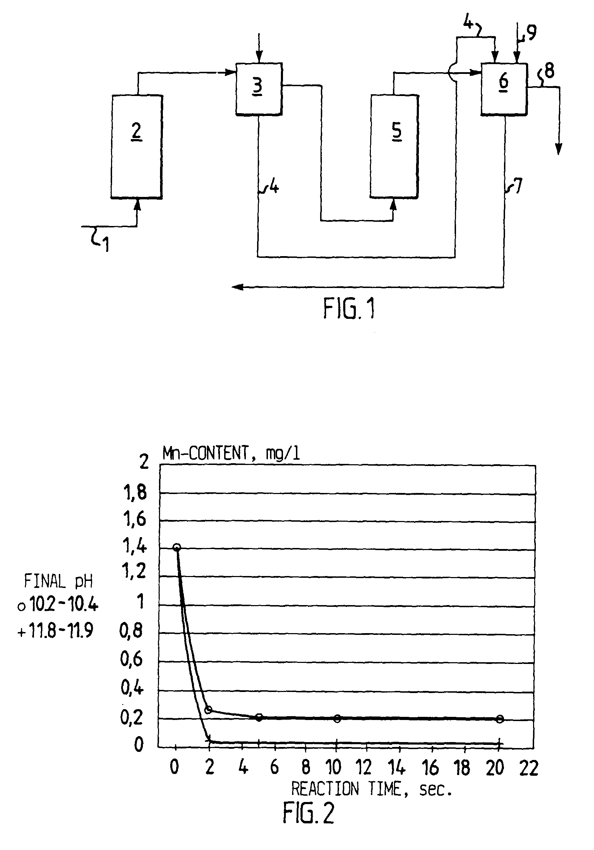

The invention is described in greater detail in claim 1 and in the following, with reference to the accompanying Figure 1 showing by way of a flow sheet an application of the method according to the invention.

Figure 2 is a diagram showing the manganese content as a function of the reaction time at one embodiment.

Unbleached pulp is supplied through a duct 1 to a pre-treatment step 2 where the pulps is treated with acid or complex former of the type EDTA or DTPA. Metals such as manganese are here solved out of the fiber material. The pulp is directed from here to a first washing step 3, for example in the form of a washing press or washing filter, where wastewater containing the critical metal ions is removed through a duct 4. The pulp free of critical metal ions is directed to a bleaching step 5 for being bleached with hydrogen peroxide or ozone. After the bleaching step 5, the pulp is directed to a second washing step 6 where the wastewater from the first washing step 3 via the duct 4 again is brought into contact with the pulp, and where the pulp again binds the original metal ions. The wastewater from the second washing step is discharged through a duct 7, and the washed pulp is taken out through a duct 8. The wastewater substantially free of metal ions thereby can be used as washing water in positions where a low content of metals is of importance, for example in a bleach plant entirely free of chlorine. The wastewater can be used in other steps of the process. For achieving an improved washing effect relating, for example, to COD etc., it can also be of interest to use an additional washing liquid 9 in the washing step 6 after the bleaching.

The pulp, thus, will transport the metals out of the bleach plant, and the accumulation effect in the bleach plant thereby can be avoided at the closing of the drain system.

The pulp somewhat enriched in metal according to the invention can be used in a conventional manner directly in the papermaking, or first be purified from metal ions, for example by treatment with washing water containing complex former at a lower pH, or be destructed.

It was found that suitable conditions for achieving good elimination of the metal ions in the second washing step 6 shall be as follows: pH of at least 10, suitably above 10.5 and preferably pH 11 or higher. Of particular interest is the pH-interval 11.5-12. The temperature should be 50-120°C, preferably 70-100°C. The contact time between process water and pulp can be very short. At optimum conditions, the time can be shorter than 1 second, but slightly longer time, 1-6 seconds, generally is better. Longer reaction times 0.1-6 min, can be applied, but do not appreciably affect the result. A time exceeding 1-5 min, therefore, normally is of no interest. The reaction time normally is determined by the washing equipment used. Very short stay times can be achieved both at the usage of a washing press and washing filter in the second washing step 6.

At an alternative method, only a partial flow of the pulp is utilized for separating the metal ions from the wastewater from the first washing step. It is, of course, also possible to use an unbleached pulp, which is not intended to be bleached, or a reject pulp flow for separating the metal ions.

It is further imaginable to utilize the metal separation according to the invention as a complement to another type of metal separation.

### EXAMPLE 1

The manganese content in an aqueous solution free of lignin, which was treated with pulp bleached with hydrogen peroxide showed a substantial decrease when the treatment was carried out at pH 12 compared to pH 10-11. Treatment for 10 minutes at 80°C.

| | Liquid |
|---|---|
| Initial content (mg/1) | 6.5 |
| Treatment at pH 10 | 6.4 |
| Treatment at pH 11 | 6.5 |
| Treatment at pH 12 | 1.2 |

### EXAMPLE 2

The manganese content was measured in a laboratory-made bleach plant drain after treatment with pulp bleached with hydrogen peroxide. The treatment was carried out at different pH values. At pH 12 as well as in two cases even at pH 11, a strong reduction of the manganese content was observed.

| | Liquid 2 | Liquid 3 | Liquid 4 |
|---|---|---|---|
| Initial content (mg/1) | 3.3 | 3.5 | 3.6 |
| Treatment at pH 10 | - | - | 3.4 |
| Treatment at pH 11 | 0.7 and, resp. 0.4 | 2.7 | 0.3 |
| Treatment at pH 12 | - | 1.3 | 0.03 |

### EXAMPLE 3

The manganese content was measured in a laboratory-made bleach plant drain after treatment with pulp bleached with hydrogen peroxide, where the treatment was carried out at different pH and temperatures. The results show that reaction times exceeding two minutes do not appreciably affect the result. Increase in pH also shows to be more important than increase in temperature.

| | pH 11/80°C | pH 12/80°C | pH 11/90°C |
|---|---|---|---|
| Initial content (mg/l) | 3.5 | 3.5 | 3.5 |
| Reaction time 2 min | 2.3 | 1.9 | 2.6 |
| Reaction time 10 min | 2.6 | 1.3 | 2.5 |
| Reaction time 60 min | - | - | 2.3 |

### EXAMPLE 4

The manganese content was measured in laboratory-made bleach plant drains from hydrogen peroxide bleaching of pulps with different lignin contents. Treatment for 10 minutes at 80°C. The lignin content of the pulp measured as kappa number has no decisive effect on the manganese content obtained.

| | Pulp 1 | Pulp 2 |
|---|---|---|
| | (kappa Number 5) | (kappa number 9) |
| Initial content (mg/l) | 3.6 | 3.6 |
| Treatment at pH 10 | 3.4 | - |
| Treatment at pH 11 | 0.3 | 1.1 |
| Treatment at pH 12 | 0.03 | <0.01 |

### EXAMPLE 5

The manganese content in an aqueous solution free of lignin which was treated with pulp bleached with hydrogen peroxide at different pH values was measured after different reaction times. The result is shown in Figure 2. It appears here that a 99% reduction of manganese can be achieved at reaction times of less than about 2 seconds when pH is 11.8-11.9 at 80°C. It also appears that reaction times exceeding about 2 seconds do not further reduce the manganese content.

## Claims

1. A method of treating process water (4) containing metal ions which are washed out (3) from pulp of lignocellulose-containing material, prior to bleaching (5) of the pulp with hydrogen peroxide or ozone,
**characterized** in that the process water (4) is brought into contact with pulp (6) which is not intended to be bleached by hydrogen peroxide or ozone, at pH of at least 10 and at a temperature of 50-120°C, whereby the metal ion content entirely or partially is removed from the process water.

2. A method as defined in claim 1, **characterized** in that the process water (4) is brought into contact with pulp at pH 11 or higher.

3. A method as defined in claim 1 or 2, **characterized** in that the process water (4) is brought into contact with pulp at pH 11-12.

4. A method as defined in claims 1-3, **characterized** in that the process water (4) is wastewater from the washing (3) of pulp after treatment (2) with complex former.

5. A method as defined in any one of the claims 1-4, **characterized** in that the metal ions which are separated at the washing (3) of the pulp prior to bleaching (5) with hydrogen peroxide or ozone are returned entirely or partially to a least a partial flow of the pulp after said bleaching (5).

6. A method as defined in any one of the claims 1-4, **characterized** in that the pulp used for separating the metal ions from the process water consists of bleached pulp, unbleached pulp or reject pulp.

## Patentansprüche

1. Verfahren zur Behandlung von Betriebswasser (4), das Metallionen enthält, die vor Bleichen (5) des Zellstoffs mit Wasserstoffperoxid oder Ozon aus (3) Zellstoff von Lignozellulose enthaltendem Material ausgewaschen werden, dadurch gekennzeichnet, daß das Betriebswasser (4) mit Zellstoff (6), der nicht zum Bleichen durch Wasserstoffperoxid oder Ozon vorgesehen ist, bei einem pH-Wert von mindestens 10 und einer Temperatur von 50-120°C in Kontakt gebracht wird, wodurch der Metallionengehalt völlig oder teilweise aus dem Betriebswasser entfernt wird.

2. Verfahren nach Anspruch 1, dadurch gekennzeichnet, daß das Betriebswasser (4) mit Zellstoff bei einem pH-Wert von 11 oder höher in Kontakt gebracht wird.

3. Verfahren nach Anspruch 1 oder 2, dadurch gekennzeichnet, daß das Betriebswasser (4) mit Zellstoff bei einem pH-Wert von 11-12 in Kontakt gebracht wird.

4. Verfahren nach Anspruch 1-3, dadurch gekennzeichnet, daß das Betriebswasser (4) Abwasser vom Waschen (3) des Zellstoffs nach Behandlung (2) mit Komplexbildner ist.

5. Verfahren nach einem der Ansprüche 1-4, dadurch gekennzeichnet, daß die Metallionen, die beim Waschen (3) des Zellstoffs vor dem Bleichen (5) mit Wasserstoffperoxid oder Ozon abgetrennt werden, völlig oder teilweise in zumindest einen Teilstrom des Zellstoffs nach dem Bleichen (5) zurückgeführt werden.

6. Verfahren nach einem der Ansprüche 1-4, dadurch gekennzeichnet, daß der zum Abtrennen der Metallionen aus dem Betriebswasser verwendete Zellstoff aus gebleichtem Zellstoff, ungebleichtem Zellstoff oder Spuckstoff besteht.

## Revendications

1. Procédé de traitement d'eaux résiduaires (4) contenant des ions métaux qui sont lessivés (3) de la pâte brute de matériau contenant de la lignocellulose, avant le blanchiment (5) de la pâte brute par du péroxyde d'hydrogène ou de l'ozone, caractérisé en ce que l'eau résiduaire (4) est amenée au contact de la pâte brute (6) qui n'est pas destinée à être blanchie par le péroxyde d'hydrogène ou par l'ozone à un pH d'au moins 10 et à une température de 50-120°C, afin que la teneur en ions métaux soit partiellement ou totalement éliminée de l'eau résiduaire.

2. Procédé selon la revendication 1, caractérisé en ce que l'eau résiduaire (4) est amenée au contact de la pâte brute à pH 11 ou plus.

3. Procédé selon la revendication 1 ou 2, caractérisé en ce que l'eau résiduaire (4) est amenée au contact de la pâte brute à pH 11-12.

4. Procédé selon les revendications 1-3 caractérisé en ce que l'eau résiduaire (4) est de l'eau usée provenant du lavage (3) de la pâte après traitement (2) avec des formateurs de complexes.

5. Procédé selon l'une quelconque des revendications 1 à 4 caractérisé en ce que les ions métaux qui sont séparés lors du lavage (3) de la pâte avant le blanchiment (5) au péroxyde d'hydrogène ou à l'ozone sont recyclés totalement ou en partie vers au moins un flux partiel de la pâte après ledit blanchiment (5).

6. Procédé tel que défini dans l'une quelconque des revendications 1-4 caractérisé en ce que la pâte brute utilisée pour séparer les ions métaux de l'eau résiduaire consiste en une pâte blanchie, une pâte non blanchie ou de la pâte de rejet.
